# EUROPÄISCHE PATENTANMELDUNG

(11) **EP 4 776 410 A1**
(43) Veröffentlichungstag der Anmeldung: **15.07.2026**
(21) Anmeldenummer: 26150318.9
(22) Anmeldetag: 06.01.2026
(51) Int. Cl.: H01M 50/249, B29C 45/00, H01M 50/209, H01M 50/28, H01M 50/282, B29C 43/00

(54) **BATTERIEGEHÄUSEDECKEL FÜR EIN BATTERIEGEHÄUSE, PRESS- UND SPRITZGUSSVERFAHREN ZUR HERSTELLUNG EINES BATTERIEGEHÄUSEDECKELS UND BATTERIEGEHÄUSE**

(30) Priorität: 08.01.2025 DE 102025100438
(71) Anmelder: Polytec Composites NL B.V., 4704 RG Roosendaal (NL); AUDI Aktiengesellschaft, 85057 Ingolstadt (DE)
(72) Erfinder: VAN GILST, Walter, 4704 RG Roosendaal (NL); RAUSCH, Julius, 74074 Heilbronn (DE)
(74) Vertreter: dompatent

(57) **Zusammenfassung**

Batteriegehäusedeckel für ein Batteriegehäuse zur Aufnahme mindestens einer Traktionsbatterie, mit einer aus einem thermoplastischen Kunststoffmaterial ausgebildeten Rahmenstruktur aufweisend einen Außenrahmen, wobei sich der Batteriegehäusedeckel entlang einer Verlaufsebene erstreckt und durch den Außenrahmen mindestens ein mittlerer Bereich in der Verlaufsebene umlaufend begrenzt ist, und wobei in dem mindestens einen mittleren Bereich mindestens ein flächiges faserverstärktes Halbzeug entlang der Verlaufsebene erstreckend angeordnet und mit der Rahmenstruktur lasttragend und stoffschlüssig verbunden ist.

## Beschreibung

Die vorliegende Erfindung betrifft gemäß einem ersten Aspekt einen Batteriegehäusedeckel für ein Batteriegehäuse zur Aufnahme mindestens einer Traktionsbatterie, gemäß einem zweiten Aspekt ein Batteriegehäuse zur Aufnahme mindestens einer Traktionsbatterie sowie gemäß weiteren Aspekten ein Pressverfahren zur Herstellung eines Batteriegehäusedeckels als auch ein Spritzgussverfahren zur Herstellung eines Batteriegehäusedeckels.

Aus dem Stand der Technik sind bereits Batteriegehäusedeckel sowie entsprechende Verfahren zur Herstellung von Batteriegehäusedeckeln bekannt geworden.

Aus dem Stand der Technik sind bereits Batteriegehäusedeckel und Batteriegehäuse bekannt geworden, welche aus Metallmaterialien ausgebebildet werden. Die gänzlich aus Metall bzw. Metalllegierungen gefertigten Batteriegehäuse weisen den bedeutenden Nachteil auf, dass die entsprechenden Batteriegehäuse und/oder Batteriegehäusedeckel jeweils über ein hohes Eigengewicht aufgrund der hohen Dichte der Metallmaterials aufweisen. Unter dem Streben nach Reduktion des resultierenden Gewichts der Batteriegehäuse bzw. Batteriegehäusedeckel wurden zur Ausbildung der Komponenten Konstruktionen gewählt, in denen unterschiedliche Materialien zur Ausbildung der Komponenten wie beispielsweise Metalle und Kunststoffe kombiniert werden. Beispielsweise sind aus dem Stand der Technik Batteriegehäuse bekannt geworden, bei welchen die Gehäuse in einer Rahmenbauweise hergestellt werden, wobei metallische Profile, wie unterer anderem Strangpressprofile, zu einem umlaufenden Rahmen zusammengefügt werden und der Rahmen dann mit Kunststoffbauteilen zur Ausbildung eines fluiddichten Aufnahmeraums zusammengefügt werden. Nachteilig an den vorbezeichneten Verfahren ist zunächst ein hoher Produktionsaufwand, da sowohl die den Rahmen bildenden Elemente als auch die Kunststoffelemente separat in unterschiedlichen Fertigungsschritten ausgebildet werden müssen und dabei auch sichergestellt werden muss, dass im Bereich der Verbindungsflächen fluiddichte Anbindungen zur Ausbildung des geforderten fluiddichten Batteriegehäuses bzw. Batteriegehäusedeckels realisiert werden. Einhergehend damit sind entsprechende dauerhafte Verbindungen zwischen den Metallmaterialien und Kunststoffmaterialien, was wiederum den bedeutenden Nachteil aufweist, dass aufgrund der Materialpaarung die spätere Recyclingfähigkeit deutlich reduziert wird oder aber der Aufwand zur sortenreinen Auftrennung der Materialien deutlich erhöht ist.

Ausgehend von den vorbezeichneten Nachteilen des Standes der Technik liegt der vorliegenden Erfindung die Aufgabe zugrunde, einen Batteriegehäusedeckel und/oder ein Batteriegehäuse sowie entsprechende Herstellungsverfahren zum Erhalt der vorbezeichneten Objekte erfindungsgemäß bereit zu stellen, bei welchen der Herstellungsaufwand, insbesondere die benötigen Herstellungsschritte gegenüber dem Stand der Technik, reduziert werden können. Wobei weiterhin erfindungsgemäß die Recyclingfähigkeit durch geeignete Materialpaarung verbessert und der Recyclingaufwand reduziert werden soll.

Die Aufgabe wird gemäß einem ersten Aspekt der Erfindung gelöst durch einen Batteriegehäusedeckel für ein Batteriegehäuse zur Aufnahme mindestens einer Traktionsbatterie mit einer aus einem thermoplastischen Kunststoffmaterial ausgebildeten Rahmenstruktur aufweisend einen Außenrahmen, wobei sich der Batteriegehäusedeckel entlang einer Verlaufsebene erstreckt und durch den Außenrahmen mindestens ein mittlerer Bereich in der Verlaufsebene umlaufend begrenzt ist und wobei in dem mindestens einen mittleren Bereich mindestens ein flächiges faserverstärktes Halbzeug entlang der Verlaufsebene erstreckend angeordnet und mit der Rahmenstruktur lasttragend und stoffschlüssig verbunden ist. Der Batteriegehäusedeckel für ein Batteriegehäuse dient der Aufnahme mindestens einer Traktionsbatterie, insbesondere einer Hochvoltbatterie bzw. einer Hochvoltbatteriezellanordnung, für den Antrieb eines batterieelektrisch angetriebenen Fahrzeugs, wie insbesondere eines batterieelektrischen Autos. Der Batteriegehäusedeckel erstreckt sich im Wesentlichen flach entlang der Verlaufsebene.

Erfindungsgemäß verläuft der Batteriegehäusedeckel entlang der Verlaufsebene im Wesentlichen plattenförmig, insbesondere im Bereich der flächigen faserverstärkten Halbzeuge. Der Batteriegehäusedeckel weist orthogonal zu der Verlaufsebene eine Wandstärke auf, erfindungsgemäß ist die Wandstärke der flächigen faserverstärkten Halbzeuge bevorzugt geringer als die Wandstärke der Rahmenstruktur. Der Außenrahmen und/oder die Stege weisen eine größere Wandstärke als die flächigen faserverstärkten Halbzeuge auf. Die Wandstärke des flächigen faserverstärkten Halbzeuges kann im Bereich von 1 bis 1,5 mm und die Wandstärke des Rahmens im Bereich von 2 bis 2,5 mm gewählt werden.

Das flächige faserverstärkte Halbzeug ist bevorzugt umlaufend und über einen Randbereich mit der Rahmenstruktur lasttragend und stoffschlüssig verbunden. Durch den lasttragenden und stoffschlüssigen Verbund der Rahmenstruktur mit dem flächigen faserverstärkten Halbzeug, welches sich in dem mindestens einem mittleren Bereich erstreckt, wird ein fluiddichter Batteriegehäusedeckel ausgebildet, welcher mit weiteren Elementen zur Ausbildung eines fluiddichten Batteriegehäuses zusammensetzbar ist.

Erfindungsgemäß kann es vorgesehen werden, dass die Rahmenstruktur zusätzlich mindestens einen Steg aufweist, wobei der mindestens eine Steg von einem ersten Ende entlang einer Erstreckungsachse in der Verlaufsebene zu einem gegenüberliegenden zweiten Ende ausgebildet ist, wobei das erste und das zweite Ende lasttragend und stoffschlüssig mit dem Außenrahmen und/oder mit einem weiteren Steg verbunden sind.

Erfindungsgemäß ist es somit vorgesehen, dass der mindestens eine Steg den mittleren Bereich bevorzugt in mehrere mittlere Bereiche unterteilen bzw. aufteilen kann. Erfindungsgemäß bevorzugt umgrenzt der Außenrahmen in der Verlaufsebene mindestens einen im Wesentlichen rechteckigen mittleren Bereich, wobei der mindestens eine im Wesentlichen rechteckige mittlere Bereich, in welchem mindestens ein flächiges faserverstärktes Halbzeug entlang der Verlaufsebene erstreckend angeordnet und mit der Rahmenstruktur lasttragend und stoffschlüssig verbunden ist. Erfindungsgemäß bevorzugt kann durch die Anordnung mindestens eines Stegs der mittlere Bereich in mehrere mittlere Bereiche unterteilt werden kann. Dies ermöglicht es, erfindungsgemäß durch Anordnung mindestens eines Stegs in den mehreren mittleren Bereichen jeweils ein flächiges faserverstärktes Halbzeug entlang der Verlaufsebene erstreckend anzuordnen und mit der Rahmenstruktur bzw. dem mindestens einen Steg lasttragend und stoffschlüssig zu verbinden.

Besonders bevorzugt wird der mindestens eine Steg in der Rahmenstruktur so vorgesehen, dass sich dieser in der Verlaufsebene entlang einer Längs- und/oder entlang einer Querachse eines im Wesentlichen rechteckigen mittleren Bereiches angeordnet ist und so im mittleren Bereich eine symmetrische Unterteilung in mehrere gleichförmige mittlere Bereiche entsteht. Dies ist besonders vorteilhaft, da die mehreren mittleren Bereiche dann in gleicher Form und mit gleichen Abmessungen vorgesehen werden können und worin jeweils flächig ein faserverstärktes Halbzeug mit gleichen Abmessungen und Formen angeordnet werden kann.

Es kann erfindungsgemäß vorgesehen werden, dass der Bereich der Rahmenstruktur, insbesondere des Außenrahmens bzw. des mindestens einen Steges, dazu vorgesehen ist, lokal flächig aufliegend auf einem Gegenstück des Batteriekastens aufzuliegen, so dass unter anderem in dem vorbezeichneten Bereich eine Anbindung des erfindungsgemäßen Batteriegehäusedeckels an einem darunter befindlichen Batteriekasten oder sonstigen Strukturen erfolgen kann. Dabei kann es vorgesehen werden, dass der Bereich der Rahmenstruktur, insbesondere des Außenrahmens und/oder des mindestens einen Steges, von der Ebene der Erstreckungsebene zumindest quer und/oder orthogonal vorsteht und damit insbesondere von dem flächigen faserverstärkten Halbzeug der Verlaufsebene vorsteht. Der vorstehende Bereich kann dabei als Anbindungsflansch bzw. Anbindungsfläche zur Verbindung des Batteriegehäusedeckels mit weiteren Komponenten des Batteriegehäuses ausgestaltet werden. Besonders bevorzugt kann in dem Bereich mindestens ein Dichtungselement angeordnet werden.

Erfindungsgemäß kann es vorgesehen werden, dass zwischen dem mindestens einen Steg und dem Außenrahmen in der Verlaufsebene eine Aussparung in dem Batteriegehäuse ausgebildet ist.

Der mindestens eine Steg und der Außenrahmen bilden dabei zusammen eine Umrandung bzw. einen Innenrahmen aus, welcher die Aussparung in der Verlaufsebene umschließt bzw. in der Verlaufsebene umlaufend umgrenzt.

Der Innenrahmen bzw. die Umrandung weisen die Möglichkeit zur Befestigung eines weiteren Bauteils auf, wobei im Bereich des Innenrahmens bzw. der Umrandung wiederum eine umlaufende Dichtung vorgesehen werden kann, so dass der erfindungsgemäße Batteriegehäusedeckel nach Verbau mit einem weiteren passenden Verschlussteil, welches an die Abmessungen und Form der Umrandung bzw. des Innenrahmens angepasst ist, zu einer abgedichteten Einheit bzw. einem fluiddichten Batteriegehäusedeckel verbunden werden kann. Neben der Vorsehung der umlaufenden Dichtung können in dem Bereich der Umrandung bzw. des Innenrahmens vorzugsweise Verschraubungen vorgesehen werden, wobei die Aussparung bzw. der Innenrahmen von der Verlaufsebene höherstehend bzw. auskragend ausgebildet werden kann. Dies bedeutet, dass die die Aussparung umlaufende Umrandung mit ihrem Dichtflansch und der Verschraubung erhaben relativ zu der Erstreckungsebene des Batteriegehäusedeckels ausgebildet werden kann. Dabei kann die auskragende Umrandung bzw. der Innenrahmen bevorzugt mit Rippen zwischen der Erstreckungsebene des Batteriegehäusedeckels sowie der oberen Kante des Dichtflansches verstärkt werden, insbesondere zur Abstützung des Dichtflansches.

Erfindungsgemäß kann es vorgesehen werden, dass zwischen dem mindestens einen Steg und dem Außenrahmen und/oder dem mindestens einen weiteren Steg in der Verlaufsebene ein flächiges faserverstärktes Halbzeug angeordnet ist.

Es kann vorgesehen werden, dass der mindestens eine Steg den Außenrahmen in der Erstreckungsebene entlang einer Längs- und/oder Querachse des Außenrahmens spiegelsymmetrisch unterteilt zur Ausbildung von mehreren mittleren Bereichen mit gleichen Abmessungen entlang der Erstreckungsebene, wobei jeweils ein flächiges faserverstärktes Halbzeug in den mittleren Bereichen angeordnet ist.

Es kann vorgesehen werden, dass das flächige faserverstärkte Halbzeug derart mit der Rahmenstruktur verbunden ist, dass sich das flächige faserverstärkte Halbzeug und die Rahmenstruktur in einem Randbereich entlang der Verlaufsebene überlappen.

Es kann vorgesehen werden, dass ein Randbereich des flächigen faserverstärkten Halbzeugs in dem die Rahmenstruktur bildenden Kunststoffmaterial zumindest teilweise eingebettet ist oder von diesem umschlossen ist. Vorzugsweise kann diesbezüglich eine ein- bzw. zweischnittige Verbindung in Form von gegenseitigen überlappenden Bereichen des flächigen faserverstärkten Halbzeugs und der Rahmenstruktur ausgebildet werden. In der Erstreckungsebene können keilförmig auslaufende Anbindungsflächen bzw. -bereiche des flächigen faserverstärkten Halbzeuges und der Rahmenstruktur ausgebildet werden.

Es kann vorgesehen werden, dass die Rahmenstruktur eine Rippenstruktur aufweist, wobei die Rippenstruktur Rippen aufweist, welche von der Ober- und/oder von der Unterseite der Verlaufsebene quer oder orthogonal zu der Verlaufsebene abstehen. Die Rippenstruktur kann besonders bevorzugt in einem Randbereich der Rahmenstruktur ausgebildet werden, besonders bevorzugt in einem Randbereich, in welchem Befestigungslöcher zur Durchführung von Befestigungselementen des Batteriegehäusedeckels vorgesehen sind. Die Rippenstruktur ist im Randbereich erfindungsgemäß so ausgestaltbar, dass auftretende Fluide, wie beispielsweise Wasser, seitlich ablaufen kann, dazu kann es vorgesehen werden, dass zur Vermeidung einer Wannenbildung die Rippen lokal unterbrochen werden, so dass beispielsweise auftretende Flüssigkeiten wie Wasser seitlich aus dem Bereich der Rippenstruktur ablaufen können.

Es kann vorgesehen werden, dass im Bereich der Rahmenstruktur, insbesondere im Bereich des Außenrahmens oder des Innenrahmens, entlang der Verlaufsebene mindestens eine Dichtnutgeometrie ausgestaltet ist. Die mindestens eine Dichtnutgeometrie ist bevorzugt in einem Randbereich der Rahmenstruktur ausgebildet, worüber die Befestigung des erfindungsgemäßen Batteriegehäusedeckels mit weiteren das Batteriegehäuse bildenden Strukturen bzw. Fahrzeugstrukturen erfolgt. Es kann dabei vorgesehen werden, dass die Dichtnutgeometrie bevorzugt entlang der Verlaufsebene umlaufend in der Rahmenstruktur ausgebildet ist. Besonders bevorzugt können zwei Dichtnutgeometrien vorgesehen werden, wobei die beiden Dichtnutgeometrien besonders bevorzugt beabstandet entlang der Verlaufsebene parallel zueinander umlaufend ausgebildet werden können.

Gemäß einer besonders bevorzugten Ausführungsform kann es vorgesehen werden, dass in der Erstreckungsebene gegenüberliegend der Dichtnutgeometrien Rippen vorgesehen werden, welche im Bereich der Dichtnutgeometrien die erfindungsgemäßen Batteriegehäusedeckel versteifen und insbesondere die Biegesteifigkeit des Batteriegehäusedeckels in dessen Erstreckungsebene lokal im Bereich der Dichtnutgeometrien erhöhen. Insbesondere bevorzugt kann es vorgesehen werden, dass schräg von der Erstreckungsebene abstehende Rippen auf der gegenüberliegenden Seite des Batteriegehäusedeckels relativ zu den vorgesehenen Dichtnutgeometrien ausgebildet werden.

Es kann vorgesehen werden, dass in mindestens eine Dichtnutgeometrieform formschlüssig eine Dichtmasse eingebracht ist. Insbesondere kann vorgesehen werden, dass die Dichtmasse auf der Rahmenstruktur im Bereich der Dichtnutgeometrie mittels eines Overmoldingverfahrens oder eines Montagespritzgusses auf der Rahmenstruktur aufgebracht und dauerhaft verbunden wird. Es kann vorgesehen werden, dass die Dichtmasse mit der Rahmenstruktur insbesondere im Bereich der Dichtnutgeometrie lasttragend und stoffschlüssig verbunden ist.

Weiterhin kann vorgesehen werden, dass das flächige faserverstärkte Halbzeug mindestens eine elektromagnetische Abschirmungsschicht aufweist, welche entlang der Verlaufsebene erstreckend angeordnet ist und auf einer unteren oder oberen Oberfläche des flächigen faserverstärkten Halbzeugs angeordnet ist oder in dem flächigen faserverstärkten Halbzeug eingebettet ist, so dass ein direkter Kontakt zum darunterliegenden Auflagebereich eines metallischen Batteriekastens möglich ist. Diesbezüglich kann es erfindungsgemäß vorgesehen werden, dass eine elektrisch kontaktierende Anbindungseinrichtung vorgesehen wird, womit die elektromagnetische Abschirmungsschicht des erfindungsgemäßen Batteriegehäusedeckels mit weiteren Strukturen bzw. weiteren Abschirmungsschichten eines Batteriegehäuses elektrisch verbunden werden kann.

In einer bevorzugten Ausführungsform kann es vorgesehen werden, dass das mindestens eine flächige faserverstärkte Halbzeug zumindest drei Schichten mit dem folgenden Schichtaufbau aufweist: Eine erste und eine zweite äußere Schicht wird jeweils aus mindestens einer Lage eines endlosfaserverstärkten Faserverbundmaterials ausgebildet, zwischen der ersten und zweiten äußeren Schicht wird eine elektromagnetische Abschirmungsschicht angeordnet. Die elektromagnetische Abschirmungsschicht kann wiederum aus einem elektrisch leitfähigen Material ausgebildet werden, besonders bevorzugt kann die Abschirmungsschicht aus einem Metallschaum oder einem Schaummaterial mit elektrisch leitfähiger Metallbeschichtung ausgebildet werden.

Die elektromagnetische Abschirmungsschicht kann aus mindestens einer Schicht eines elektrisch leitfähigen Materials gebildet werden, wobei die mindestens eine Schicht bevorzugt eine Metallfolie oder eine metallische Gitterstruktur oder ein Kunststoffgewebe mit einer Metallbeschichtung oder eine Kunststofffolie mit einer Metallbeschichtung umfasst.

Das flächige faserverstärkte Halbzeug kann bevorzugt aus einem faserverstärkten Kunststoffmaterial ausgebildet werden, besonders bevorzugt aus einem faserverstärkten thermoplastischen Kunststoffmaterial. Gemäß einer besonders bevorzugten Ausführungsform kann das flächige faserverstärkte Halbzeug aus einen GMT-Material ausgebildet werden.

Das flächige faserverstärkte Halbzeug ist bevorzugt aus einem Organoblech ausgebildet. Das faserverstärkte Kunststoffmaterial kann bevorzugt UD-Tape und/oder einen Vliesstoff mit Faserverstärkung umfassen, wobei sich das UD-Tape und/oder die Faserverstärkungsschicht entlang der Verlaufsebene erstrecken, wobei besonders bevorzugt die Verstärkungsfasern entlang der Verlaufsebene erstreckend ausgebildet werden können.

Das thermoplastische Kunststoffmaterial, welches das flächige faserverstärkte Halbzeug ausbildet, kann eine Langfaser- und/oder Endlosfaserverstärkung umfassen.

Das flächige faserverstärkte Halbzeug kann eine Profilierung aufweisen und/oder es können Sicken in das Halbzeug eingeprägt werden.

Die Rahmenstruktur umfassend den Innen- und/oder Außenrahmen bzw. den mindestens einen Steg kann erfindungsgemäß bevorzugt über ein Press- oder Spritzgussverfahren ausgebildet werden.

Die Rahmenstruktur kann besonders bevorzugt aus einem glasfaserverstärkten thermoplastischen Kunststoff ausgebildet werden. Erfindungsgemäß kann es dabei ebenfalls vorgesehen werden, dass die Rahmenstruktur aus einem glasmattenverstärkten thermoplastischen Kunststoffmaterial ausgebildet wird. Bevorzugt wird die Rahmenstruktur über ein DLFT-Material ausgebildet.

Besonders bevorzugt kann eine Paarung bzw. Materialkombination zwischen dem faserverstärkten thermoplastischen Kunststoffmaterial der Rahmenstruktur und des flächigen faserverstärkten Halbzeugs vorgesehen werden. Erfindungsgemäß können somit die Rahmenstruktur und das flächige faserverstärkte Halbzeug aus den gleichen Kunststoff- und/oder Fasermaterialien hergestellt werden. So kann beispielsweise die Rahmenstruktur aus einem faserverstärkten Polypropylen ausgebildet werden und das flächige faserverstärkte Halbzeug ebenfalls aus einem propylenbasierten Halbzeug gebildet werden.

Erfindungsgemäß kann es vorgesehen werden, dass im Bereich der Rahmenstruktur, wie insbesondere im Bereich des Außenrahmens und/oder des Steges, mehrere Durchbrüche bzw. Löcher zur Durchführung von Befestigungsmitteln ausgebildet sind. Weiterhin können im Bereich der Rahmenstruktur Befestigungsmittel, wie beispielsweise Gewindeeinsätze, eingebettet werden.

Gemäß einem zweiten Aspekt betrifft die vorliegende Erfindung ein Batteriegehäuse zur Aufnahme mindestens einer Traktionsbatterie, umfassend einen Batteriegehäusedeckel gemäß dem ersten Aspekt der Erfindung und eine Batteriegehäuseschale, wobei die Gehäuseschale mit dem Batteriegehäusedeckel zusammenfügbar ist zur Ausbildung eines Aufnahmeraums für die mindestens eine Traktionsbatterie.

Der ausgebildete Aufnahmeraum kann erfindungsgemäß allseitig umschlossen bzw. zu zumindest einer Seite offen ausgestaltet werden, beispielsweise zum Verschluss durch weitere Elemente.

Der Gehäusedeckel und die Gehäuseschale können über entsprechende Befestigungsmittel zusammengefügt werden zur Ausbildung eines gegenüber der Umgebung zumindest teilweise und/oder vollständig fluiddicht abgegrenzten Aufnahmeraums.

Gemäß einem weiteren Aspekt betrifft die vorliegende Erfindung ein Batteriegehäuse zur Aufnahme mindestens einer Traktionsbatterie, umfassend zwei erfindungsgemäße Batteriegehäusedeckel gemäß dem ersten Aspekt der Erfindung und einen Batteriegehäuserahmen, wobei der Batteriegehäuserahmen mit den erfindungsgemäßen Batteriegehäusedeckeln zusammenfügbar ist zur Ausbildung eines Aufnahmeraums für die mindestens eine Traktionsbatterie.

Es kann vorgesehen werden, dass der Batteriegehäusedeckel mit der Batteriegehäuseschale und/oder der Batteriegehäusedeckel mit dem Batteriegehäuserahmen über Befestigungselemente, bevorzugt über eine Mehrzahl von Schrauben bzw. Schraubelementen, zusammenfügbar ist.

Gemäß einem vierten Aspekt der vorliegenden Erfindung kann ein Pressverfahren zur Herstellung eines erfindungsgemäßen Batteriegehäusedeckels bevorzugt mit den Merkmalen gemäß dem ersten Aspekt der vorliegenden Erfindung vorgesehen werden, wobei das Verfahren die folgenden Schritte umfasst:
a) Bereitstellen eines Zuschnittes eines thermoplastischen Kunststoffmaterials für die Ausbildung der Rahmenstruktur;
b) Bereitstellen mindestens eines Zuschnittes eines thermoplastischen flächigen faserverstärkten Halbzeuges;
c) Erhitzen der in den Schritten a) und b) bereitgestellten thermoplastischen Zuschnitte auf eine Temperatur oberhalb der jeweiligen Glasübergangstemperaturen, besonders bevorzugt oberhalb der Schmelzpunkte der thermoplastischen Kunststoffe;
d) Überführen und Zusammensetzen der erhitzen Zuschnitte entsprechend einem Ablagemuster für den Batteriegehäusedeckel in eine geöffnete Werkzeugkavität einer Formpresse; sowie
e) Schließen der Werkzeugkavität und Aufbringen eines Pressdrucks mittels der Formpresse zur Formung des Batteriegehäusedeckels innerhalb der Werkzeugkavität.

Alternativ kann gemäß einem weiteren Aspekt der vorliegenden Erfindung ein Spritzgussverfahren zur Herstellung eines erfindungsgemäßen Batteriegehäusedeckels, bevorzugt mit den Merkmalen gemäß dem ersten Aspekt, vorgesehen werden, umfassend die Schritte:
a) Bereitstellen eines thermoplastischen Kunststoffmaterials für die Ausbildung der Rahmenstruktur;
b) Bereitstellen mindestens eines Zuschnittes eines thermoplastischen flächigen faserverstärkten Halbzeuges;
c) Erhitzen des in dem Schritt b) bereitgestellten mindestens einen Zuschnittes eines thermoplastischen flächigen faserverstärkten Halbzeuges auf eine Temperatur oberhalb der jeweiligen Glasübergangstemperatur, bevorzugt oberhalb des Schmelzpunktes des thermoplastischen Kunststoffes;
d) Überführen und Ablegen des im Schritt c) erhitzten mindestens einen Zuschnittes entsprechend einem Ablagemuster für den Batteriegehäusedeckel in eine geöffnete Werkzeugkavität eines Spritzgusswerkzeuges; sowie
e) Schließen der Werkzeugkavität des Spritzgusswerkzeugs, Aufheizen des thermoplastischen Kunststoffmaterials aus Schritt a) und Einspritzen des aufgeschmolzenen Kunststoffmaterials zur Formung der Rahmenstruktur des Batteriegehäusedeckels zum Erhalt des Batteriegehäusedeckels innerhalb der Werkzeugkavität.

Das erfindungsgemäße Pressverfahren bzw. Fließpressverfahren weist den Vorteil auf, dass während des Pressvorgangs zur Formung des erfindungsgemäßen Batteriegehäusedeckels im Bereich des flächigen faserverstärkten Halbzeugs es lediglich zu einer Komprimierung in Richtung orthogonal zu der Verlaufsebene kommt, wohingegen es lediglich im Bereich der Rahmenstruktur während des Pressvorgangs zum Formpressen bzw. Fließpressen kommt. Da es lediglich im Bereich der Rahmenstruktur zum Fließpressen kommt, kann erfindungsgemäß der zur Formung des erfindungsgemäßen Batteriegehäusedeckels benötigte Pressdruck deutlich reduziert werden.

Im Nachfolgenden werden unter Bezugnahme auf die beigefügten Figuren beispielhafte Ausführungsformen erfindungsgemäßer Batteriegehäusedeckel für ein Batteriegehäuse ausgeführt.

Es zeigen:
- Fig. 1A: eine schematische Aufsicht auf eine erste beispielhafte Ausführungsform eines erfindungsgemäßen Batteriegehäusedeckels;
- Fig. 1B: eine Schnittansicht des Batteriegehäusedeckels gemäß Fig. 1A;
- Fig. 2A: eine schematische Aufsicht auf eine zweite beispielhafte Ausführungsform eines erfindungsgemäßen Batteriegehäusedeckels;
- Fig. 2B: eine Schnittansicht des Batteriegehäusedeckels gemäß Fig. 2A;
- Fig. 3A: eine schematische Aufsicht auf eine dritte beispielhafte Ausführungsform eines erfindungsgemäßen Batteriegehäusedeckels;
- Fig. 3B: eine Schnittansicht des Batteriegehäusedeckels gemäß Fig. 3A; sowie die
- Fign. 4A-4E: fünf unterschiedliche Ausführungsformen des Anbindungs- und Übergangsbereiches zwischen der Rahmenstruktur und dem flächigen faserverstärkten Halbzeug in vergrößerter Schnittansicht.

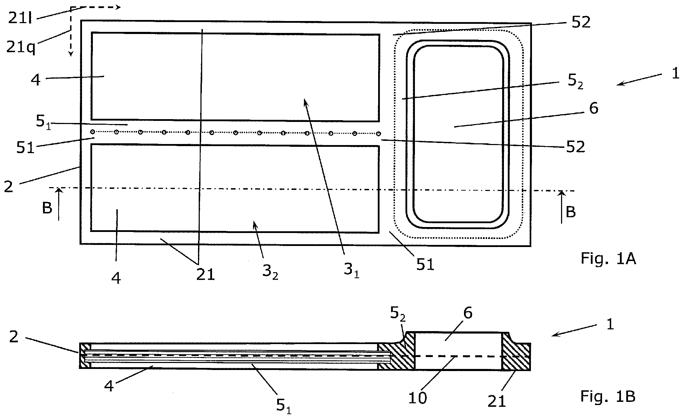

In der Fig. 1A ist eine schematische Aufsicht auf einen erfindungsgemäßen Batteriegehäusedeckel 1 in einer ersten beispielhaften Ausführungsform dargestellt. Der Batteriegehäusedeckel 1 für ein Batteriegehäuse zur Aufnahme mindestens einer Traktionsbatterie weist zunächst eine aus einem thermoplastischen Kunststoffmaterial ausgebildete Rahmenstruktur 2 mit einem Außenrahmen 21 auf, wobei sich der Batteriegehäusedeckel 1, so wie dies durch die gestrichelte Linie in Fig. 1B dargestellt ist, entlang einer Verlaufsebene 10 erstreckt und durch den Außenrahmen 21 mindestens ein mittlerer Bereich 3 in der Verlaufsebene 10 umlaufend begrenzt ist. In der dargestellten beispielhaften Ausführungsform gemäß den Figuren 1A und 1B umfasst der Batteriegehäusedeckel 1 zwei mittlere Bereiche, welche mit den Bezugszeichen 3₁ und 3₂ gekennzeichnet sind. Die Figur 1A zeigt somit eine Aufsicht auf die Verlaufsebene 10 des Batteriegehäusedeckels 1. Die Verlaufsebene 10 soll dabei erfindungsgemäß, anders als in der Mathematik, eine Dicke aufweisen, um eben auch eine gewisse Höhe der Rahmenstruktur orthogonal zu der Verlaufsebene auszubilden, so wie dies der Fig. 1B entnehmbar ist. In dem mindestens einen mittleren Bereich 3 ist mindestens ein flächiges faserverstärktes Halbzeug 4 entlang der Verlaufsebene 10 erstreckend angeordnet und mit der Rahmenstruktur 2 lasttragend und stoffschlüssig verbunden. In der dargestellten beispielhaften Ausführungsform sind in den beiden mittleren Bereichen 3₁ und 3₂ jeweils ein flächiges faserverstärktes Halbzeug 4 angeordnet. In der dargestellten Ausführungsform sind die beiden mittleren Bereiche 3₁ und 3₂ durch zwei Stege 5 ausgebildet, wobei sich der jeweilige Steg von einem ersten Ende 51 entlang einer Erstreckungsachse 50 in der Verlaufsebene 10 zu einem gegenüberliegenden zweiten Ende 52 erstreckt, wobei das erste und das zweite Ende 51, 52 jeweils lasttragend und stoffschlüssig mit dem Außenrahmen 21 und/oder mit einem weiteren Steg 5 verbunden sind. Die dargestellte Ausführungsform gemäß den Figuren 1 verfügt über zwei Stege 5, wobei ein erster Steg 5₁ den Außenrahmen 21 in der Erstreckungsebene 10 entlang einer Längsrichtung 21l spiegelsymmetrisch unterteilt, wobei das zweite Ende 52 des ersten Steges, welcher sich entlang der Längsachse erstreckt, an einen weiteren zweiten Steg 5 stoffschlüssig angebunden ist. Der zweite Steg 5₂ verläuft dabei entlang einer Querrichtung 21q des Außenrahmens 21 und ist jeweils an dem ersten Ende 51 und dem zweiten Ende 52 lasttragend und stoffschlüssig mit dem Außenrahmen 21 verbunden, wobei zwischen dem zweiten Steg 5₂ und dem Außenrahmen 21 in der Verlaufsebene 10 eine Aussparung 6 in dem Batteriegehäusedeckel ausgebildet ist. So wie dies der Fig. 1A entnehmbar ist, wird der Außenrahmen 21 durch den ersten Steg 5₂ in der Erstreckungsebene 21 entlang der Längsrichtung 21l spiegelsymmetrisch unterteilt zur Ausbildung der zwei mittleren Bereiche 3₁ und 3₂, welche die gleichen Abmessungen entlang der Erstreckungsebene 10 aufweisen. So wie dies insbesondere der Fig. 1B der Schnittansicht entnehmbar ist, kann es vorgesehen werden, dass das flächige faserverstärkte Halbzeug 4 derart mit der Rahmenstruktur 2 verbunden ist, dass sich das flächige faserverstärkte Halbzeug 4 und die Rahmenstruktur 2 in einem Randbereich entlang der Verlaufsebene 10 überlappen. So wie dies in der Fig. 1B beispielhaft dargestellt ist, ist das flächige faserverstärkte Halbzeug 4 im Randbereich vollständig in die Rahmenstruktur 2 eingebettet und von dieser umschlossen.

So wie dies beispielhaft in der Fig. 1A verdeutlicht ist, können im Bereich der Rahmenstruktur 2, insbesondere im Bereich des Steges 5, eine Mehrzahl von Durchbrüchen bzw. Löchern vorgesehen werden, durch welche beispielsweise Befestigungsmittel zur Befestigung bzw. Verschraubung des Batteriegehäusedeckels vorgesehen werden können.

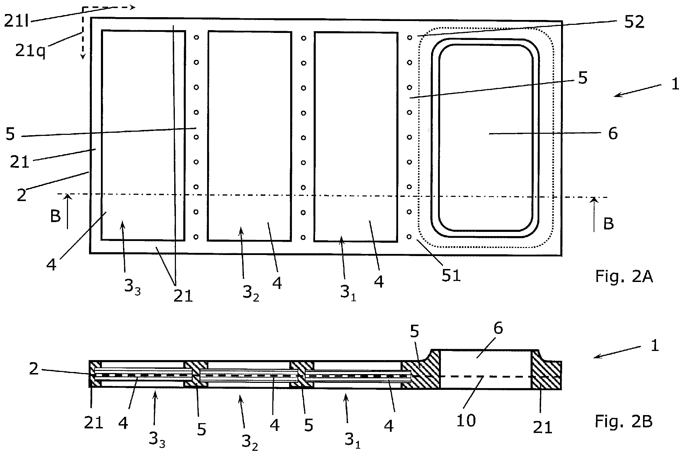

Die Figuren 2A und 2B zeigen eine zweite beispielhafte Ausführungsform eines erfindungsgemäßen Batteriegehäusedeckels, wobei sich die Ausführungsform gemäß den Figuren 2A und 2B von der Fig. 1A und 1B dahingehend unterscheidet, dass gemäß Figuren 2A und 2B der mittlere Bereich durch Vorsehung von drei Stegen 5 unterteilt wird, wobei sich die Stege 5 jeweils entlang einer Querrichtung 21q relativ zum Außenrahmen 21 erstrecken und den Außenrahmen 21 in drei mittlere Bereiche 3₁, 3₂ und 3₃ unterteilen. Weiterhin wird zwischen dem in der Zeichenebene rechten Quersteg 5 und dem Außenrahmen 21 eine Aussparung 6 in dem Batteriegehäusedeckel 1 ausgebildet. So wie dies auch insbesondere dem Schnitt gemäß Fig. 2B entnehmbar ist, sind die drei mittleren Bereiche 3₁, 3₂ und 3₃ jeweils mit einem flächigen faserverstärkten Halbzeug 4, welches sich entlang der Verlaufsebene 10 erstreckend angeordnet ist und mit der Rahmenstruktur 2 lasttragend und stoffschlüssig verbunden ist, ausgebildet. In der Ausführungsform gemäß Figuren 2A und 2B sind Durchbrüche bzw. Löcher in den Bereichen der Querstege 5 vorgesehen, zur Verschraubung bzw. Befestigung des Batteriegehäusedeckels 1 an weiteren Strukturen.

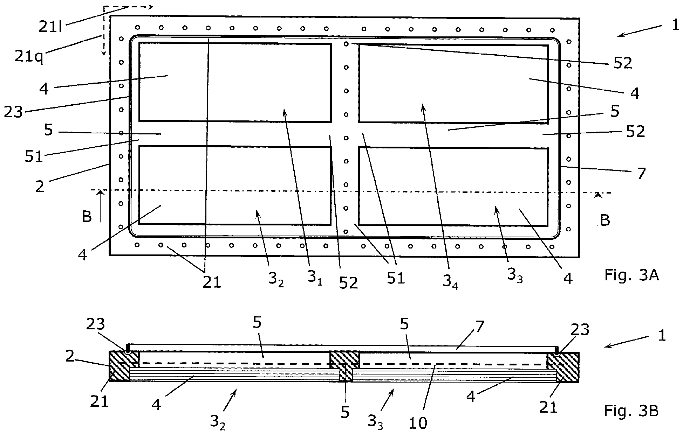

In den Figuren 3A und 3B ist eine weitere beispielhafte dritte Ausführungsform eines erfindungsgemäßen Batteriegehäusedeckels dargestellt, wobei gemäß Figu-ren 3A und 3B der mittlere Bereich durch zwei Längs- und zwei Querstege 5 in vier mittlere Bereiche 3₁, 3₂, 3₃ und 3₄ unterteilt ist. In der Ausführungsform gemäß Figuren 3A und 3B sind sowohl im Bereich des Außenrahmens 21 als auch im Bereich der beiden Querstege 5 wiederum Befestigungslöcher vorgesehen. Weiterhin verfügt die beispielhafte Ausführungsform des Batteriegehäusedeckels 1 gemäß Figuren 3A und 3B über eine Dichtnutgeometrie 23, in welcher formschlüssig eine Dichtmasse 7 eingebracht ist.

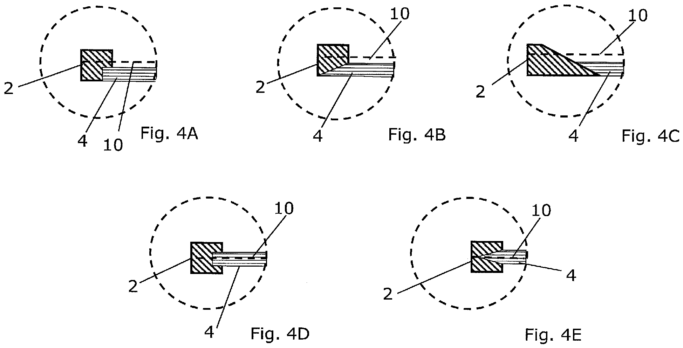

Die Figuren 4A bis 4E zeigen fünf unterschiedliche Anbindungskonfigurationen in einem Randbereich eines flächigen faserverstärkten Halbzeuges 4 und der Rahmenstruktur 2. Die Figuren 4A bis 4C zeigen dabei einschnittige Verbindungen, die Figuren 4D und 4E doppel- bzw. zweischneidige Verbindungen. Bevorzugt kann es vorsehen werden, dass das flächige faserverstärkte Halbzeug 4 und/oder die Rahmenstruktur 2 entlang der Verlaufsebene 10 sich keilförmig verjüngend ausgebildet ist.

## Patentansprüche

1. Batteriegehäusedeckel (1) für ein Batteriegehäuse zur Aufnahme mindestens einer Traktionsbatterie,
mit einer aus einem thermoplastischen Kunststoffmaterial ausgebildeten Rahmenstruktur (2), aufweisend einen Außenrahmen (21);
wobei sich der Batteriegehäusedeckel (1) entlang einer Verlaufsebene (10) erstreckt und durch den Außenrahmen (21) mindestens ein mittlerer Bereich (3) in der Verlaufsebene (10) umlaufend begrenzt ist, und
wobei in dem mindestens einen mittleren Bereich (3) mindestens ein flächiges faserverstärktes Halbzeug (4) entlang der Verlaufsebene (10) erstreckend angeordnet und mit der Rahmenstruktur (2) lasttragend und stoffschlüssig verbunden ist.

2. Batteriegehäusedeckel (1) nach Anspruch 1, wobei die Rahmenstruktur (2) zusätzlich mindestens einen Steg (5) aufweist, wobei der mindestens eine Steg (5) von einem ersten Ende (51) entlang einer Erstreckungsachse (50) in der Verlaufsebene (10) zu einem gegenüberliegendem zweiten Ende (52) ausgebildet ist, wobei das erste und das zweite Ende (51, 52) lasttragend und stoffschlüssig mit dem Außenrahmen (21) und/oder mit einem weiteren Steg (5) verbunden sind.

3. Batteriegehäusedeckel (1) nach Anspruch 2, wobei zwischen dem mindestens einen Steg (5) und dem Außenrahmen (21) in der Verlaufsebene (10) eine Aussparung (6) in dem Batteriegehäusedeckel (1) ausgebildet ist.

4. Batteriegehäusedeckel (1) nach Anspruch 2, wobei zwischen dem mindestens einem Steg (5) und dem Außenrahmen (21) und/oder mindestens einem weiteren Steg (5) in der Verlaufsebene (10) ein flächiges faserverstärktes Halbzeug (4) angeordnet ist.

5. Batteriegehäusedeckel (1) nach einem der Ansprüche 2 bis 4, wobei der mindestens eine Steg (5) den Außenrahmen (21) in der Erstreckungsebene (21l) entlang einer Längs- und/oder einer Querachse (21l, 21q) des Außenrahmens (21) spiegelsymmetrisch unterteilt zur Ausbildung von mehreren mittleren Bereichen (3) mit gleichen Abmessungen entlang der Erstreckungsebene (10), wobei jeweils ein flächiges faserverstärktes Halbzeug (4) in den mittleren Bereichen (3) angeordnet ist.

6. Batteriegehäusedeckel (1) nach einem der vorhergehenden Ansprüche, wobei das flächige faserverstärkte Halbzeug (4) derart mit der Rahmenstruktur (2) verbunden ist, dass sich das flächige faserverstärkte Halbzeug (4) und die Rahmenstruktur (2) in einem Randbereich entlang der Verlaufsebene (10) überlappen.

7. Batteriegehäusedeckel (1) nach einem der vorhergehenden Ansprüche, wobei die Rahmenstruktur (2) eine Rippenstruktur aufweist, wobei die Rippenstruktur Rippen aufweist, die von einer Ober- und/oder einer Unterseite der Verlaufsebene (10) quer zu der Verlaufsebene (10) abstehen.

8. Batteriegehäusedeckel (1) nach einem der vorhergehenden Ansprüche, wobei die Rahmenstruktur (2) entlang der Verlaufsebene (10) mindestens eine Dichtnutgeometrie (23) aufweist, wobei bevorzugt in die mindestens eine Dichtnutgeometrie (23) formschlüssig eine Dichtmasse (7) eingebracht ist.

9. Batteriegehäusedeckel (1) nach einem der vorhergehenden Ansprüche, wobei das flächige faserverstärkte Halbzeug (4) mindestens eine elektromagnetische Abschirmungsschicht aufweist, welche entlang der Verlaufsebene (10) erstreckend angeordnet ist auf einer unteren oder oberen Oberfläche (41, 42) des flächigen faserverstärkten Halbzeuges (4) oder in dem flächigen faserverstärkten Halbzeug (4) eingebettet ist, wobei eine elektrische Kontaktierung zum Auflagebereich eines metallischen Batteriekastens über ein elektrisches Kontaktelement ausgebildet ist, wobei bevorzugt die elektromagnetische Abschirmungsschicht mindestens eine Schicht eines elektrisch leitfähigen Materials aufweist, wobei die mindestens eine Schicht bevorzugt eine Metallfolie oder eine metallische Gitterstruktur oder ein Kunststoffgewebe mit einer Metallbeschichtung oder eine Kunststofffolie mit einer Metallbeschichtung aufweist.

10. Batteriegehäusedeckel (1) nach einem der vorhergehenden Ansprüche, wobei das flächige faserverstärkte Halbzeug (4) aus einem faserverstärkten Kunststoffmaterial ausgebildet ist, bevorzugt aus einem faserverstärkten thermoplastischen Kunststoffmaterial und/oder wobei die Rahmenstruktur (2) aus einem glasfaserverstärkten thermoplastischen Kunststoff ausgebildet ist.

11. Batteriegehäusedeckel (1) nach einem der vorhergehenden Ansprüche, wobei die Rahmenstruktur (2) über einen Press- oder Spritzgussprozess ausgebildet wird.

12. Batteriegehäuse zur Aufnahme mindestens einer Traktionsbatterie, umfassend einen Batteriegehäusedeckel (1) nach einem der Ansprüche 1 bis 11 und
eine Gehäuseschale, wobei die Gehäuseschale mit dem Batteriegehäusedeckel (1) zusammenfügbar ist zur Ausbildung eines Aufnahmeraums für die mindestens eine Traktionsbatterie
oder einen Gehäuserahmen, wobei der Gehäuserahmen mit den Batteriegehäusedeckeln (1) zusammenfügbar ist zur Ausbildung eines Aufnahmeraums für die mindestens eine Traktionsbatterie.

13. Batteriegehäuse nach Anspruch 12, wobei der Gehäusedeckel (1) mit der Gehäuseschale oder der Batteriegehäusedeckel (1) mit dem Gehäuserahmen über Befestigungselemente, bevorzugt über eine Mehrzahl von Schrauben, zusammenfügbar sind.

14. Pressverfahren zur Herstellung eines Batteriegehäusedeckels (1) bevorzugt mit den Merkmalen gemäß einem der Ansprüche 1 bis 11, das Verfahren umfassend die Schritte:
a) Bereitstellen eines Zuschnittes eines thermoplastischen Kunststoffmaterials für die Ausbildung der Rahmenstruktur (2);
b) Bereitstellen mindestens eines Zuschnittes eines thermoplastischen flächigen faserverstärkten Halbzeuges (4);
c) Erhitzen der in den Schritten a) und b) bereitgestellten thermoplastischen Zuschnitte auf eine Temperatur oberhalb der jeweiligen Glasübergangstemperaturen, besonders bevorzugt oberhalb der Schmelzpunkte der thermoplastischen Kunststoffe;
d) Überführen und Zusammensetzen der erhitzen Zuschnitte entsprechend einem Ablagemuster für den Batteriegehäusedeckel (1) in eine geöffnete Werkzeugkavität einer Formpresse; sowie
e) Schließen der Werkzeugkavität und Aufbringen eines Pressdrucks mittels der Formpresse zur Formung des Batteriegehäusedeckels (1) innerhalb der Werkzeugkavität.

15. Spritzgussverfahren zur Herstellung eines Batteriegehäusedeckels (1) bevorzugt mit den Merkmalen gemäß einem der Ansprüche 1 bis 11, das Verfahren umfassend die Schritte:
a) Bereitstellen eines thermoplastischen Kunststoffmaterials für die Ausbildung der Rahmenstruktur (2);
b) Bereitstellen mindestens eines Zuschnittes eines thermoplastischen flächigen faserverstärkten Halbzeuges (4);
c) Erhitzen des in dem Schritt b) bereitgestellten mindestens einen Zuschnittes eines thermoplastischen flächigen faserverstärkten Halbzeuges (4) auf eine Temperatur oberhalb der jeweiligen Glasübergangstemperatur, bevorzugt oberhalb des Schmelzpunktes des thermoplastischen Kunststoffes;
d) Überführen und Ablegen des im Schritt c) erhitzten mindestens einen Zuschnittes entsprechend einem Ablagemuster für den Batteriegehäusedeckel (1) in eine geöffnete Werkzeugkavität eines Spritzgusswerkzeuges; sowie
e) Schließen der Werkzeugkavität des Spritzgusswerkzeugs, Aufheizen des thermoplastischen Kunststoffmaterials aus Schritt a) und Einspritzen des aufgeschmolzenen Kunststoffmaterials zur Formung der Rahmenstruktur (2) des Batteriegehäusedeckels (1) zum Erhalt des Batteriegehäusedeckels (1) innerhalb der Werkzeugkavität.
